# EUROPÄISCHE PATENTSCHRIFT

(11) **EP 0 707 541 B1**
(45) Veröffentlichungstag und Bekanntmachung des Hinweises auf die Patenterteilung: **18.06.1997**
(21) Anmeldenummer: 94924782.9
(22) Anmeldetag: 18.07.1994
(51) Int. Cl.: B60J 7/057, H02K 7/116

(54) **ANTRIEBSVORRICHTUNG FÜR EIN VERSTELLBARES TEIL EINES FAHRZEUGES**
DRIVING DEVICE FOR AN ADJUSTABLE PART OF A VEHICLE
SYSTEME D'ENTRAINEMENT POUR UNE PARTIE REGLABLE D'UN VEHICULE

(30) Priorität: 16.07.1993 DE 4323945
(43) Veröffentlichungstag der Anmeldung: 24.04.1996
(73) Patentinhaber: WEBASTO KAROSSERIESYSTEME GmbH, D-82131 Stockdorf (DE)
(72) Erfinder: GRUBER, Reinhold, D-87669 Dietringen (DE); VORDERMAIER, Claus, D-81243 München (DE); SCHMIDT, Andreas, D-82131 Gauting (DE)
(74) Vertreter: Wiese, Gerhard
(86) Internationale Anmeldenummer: EP9402359
(87) Internationale Veröffentlichungsnummer: WO9502518

(56) Entgegenhaltungen:
- EP-A- 0 469 286
- DE-U- 9 116 261

## Beschreibung

Die Erfindung bezieht sich auf eine Antriebsvorrichtung für ein zwischen Endstellungen verstellbares Teil eines Fahrzeugs, insbesondere für den Deckel eines Fahrzeugdaches, mit einem Elektromotor, der über ein Untersetzungsgetriebe mit einem auf einer Abtriebswelle sitzenden Antriebsritzel verbunden ist, das seinerseits mit dem verstellbaren Teil in Antriebsverbindung steht, sowie mit einer den Motor steuernden Schalteinrichtung zum Stillsetzen des Motors in mindestens einer vorbestimmten Stellung des verstellbaren Teils, wobei zum Betätigen der Schalteinrichtung ein Schaltrad vorgesehen ist, das beim Verstellen des Teils zwischen seinen Endstellungen über ein Exzenterzahnrädergetriebe zu einer Drehbewegung von weniger als 360° veranlaßt wird, wobei das Exzenterzahnrädergetriebe ein Außenrad mit einer zu einer Welle des Exzenterzahnrädergetriebes koaxialen Innenverzahnung und ein damit in Kämmeingriff stehendes außenverzahntes Innenrad aufweist, das mindestens einen Zahn weniger als das Außenrad hat, und das auf einem mit der Welle drehfest verbundenen Exzenter für eine relative Drehbewegung zwischen Innenrad und Exzenter gelagert ist, wobei das Innenrad mittels eines feststehenden Führungsbolzens an einer Umlaufbewegung gegenüber dem Außenrad gehindert und das Außenrad mit dem Schaltrad drehfest verbunden ist.

Bei einer bekannten Antriebsvorrichtung dieser Art (EP 0 469 286 A2) ist das Innenrad des Exzenterzahnrädergetriebes an einer vorbestimmten Stelle mit einer Radialausnehmung versehen, die entweder radial innerhalb der Verzahnung des Innenrades oder in einem über diese Verzahnung radial nach außen vorspringenden Teil des Innenrades ausgebildet ist und in welche der Führungsbolzen verschiebbar eingreift. Bei der Montage der bekannten Antriebsvorrichtung muß das Innenrad genau in eine solche Drehstellung gebracht werden, daß der Führungsbolzen mit der Radialausnehmung des Innenrades ausgerichtet ist, bevor das Innenrad gegenüber dem Führungsbolzen in Axialrichtung verlagert werden kann, um den Führungsbolzen in die Radialausnehmung eingreifen zu lassen.

Der Erfindung liegt die Aufgabe zugrunde, eine Antriebsvorrichtung der eingangs genannten Art zu schaffen, die eine vereinfachte Montage zulaßt.

Ausgehend von einer Antriebsvorrichtung der eingangs genannten Art wird diese Aufgabe erfindungsgemäß dadurch gelöst, daß das Innenrad mit einer der Innenrad-Zähnezahl entsprechenden Anzahl von Ausnehmungen versehen ist und der Führungsbolzen wahlweise mit einer dieser Ausnehmungen in Eingriff gebracht ist.

Bei der Antriebsvorrichtung nach der Erfindung gibt es für den Zusammenbau nicht nur eine einzige mögliche gegenseitige Winkelausrichtung von Führungsbolzen und Innenrad des Exzenterzahnrädergetriebes. Vielmehr kann das Innenrad beliebig in einer Anzahl von Stellungen montiert werden, die der Anzahl der Außenzähne des Innenrades entspricht. Dies hat eine erhebliche Vereinfachung der Montage zur Folge.

In weiterer Ausgestaltung der Erfindung sind die Ausnehmungen, die zum Zusammenwirken mit dem feststehenden Führungsbolzen bestimmt sind, von den Zahnlücken der Zähne des Innenrades gebildet. Dadurch entfällt die Notwendigkeit, das Innenrad mit zusätzlichen Ausnehmungen zu versehen. Das Innenrad erhält infolgedessen eine besonders einfache Gestalt. Außerdem gewährleistet diese Ausführungsform, daß der Eingriff zwischen dem Führungsbolzen und dem Innenrad genau im Bereich der Innenradverzahnung liegt. Dies bewirkt, daß das Außenrad und damit auch das Schaltrad in Abhängigkeit von der Taumelbewegung des Innenrades periodisch zum Stillstand kommt. Diese Bewegungscharakteristik sorgt für ein besonders sicheres Ansprechen der von dem Schaltrad betätigten Schalteinrichtung selbst bei hohen Schaltgeschwindigkeiten oder bei sehr trägen Schaltsystemen.

Bei einer abgewandelten Ausführungsform der Erfindung ist das Innenrad mit einer Folge von zusätzlichen Ausnehmungen versehen, deren gegenseitiger Winkelabstand mit demjenigen der Zähne des Innenrades übereinstimmt und die zweckmäßig als radial gerichtete Langlöcher ausgebildet sind, welche in Umfangsrichtung mit den Zahnköpfen des Innenrades ausgerichtet sind.

Mit der Welle des Exzenterzahnrädergetriebes kann vorteilhaft ein Zahnrad drehfest verbunden sein, das mit der Abtriebsseite des Untersetzungsgetriebes in Antriebsverbindung steht, wobei dieses Zahnrad zweckmäßig auf der Welle des Exzenterzahnrädergetriebes axial verstellbar montiert und in der einen axialen Richtung federnd abgestützt ist, um für eine exakte Positionierung des Zahnrades innerhalb des Gehäuses der Antriebsvorrichtung zu sorgen. Dabei trägt das Zahnrad in vorteilhafter weiterer Ausgestaltung der Erfindung mindestens zwei radial auf entgegengesetzten Seiten der Welle des Exzenterzahnrädergetriebes liegende Federarme, die vorzugsweise einfach durch entsprechendes Ausstanzen des Zahnrades gebildet sind und die sich an einer feststehenden Führungbahn, beispielsweise einem ringförmigen Steg an einem Gehäuseteil der Antriebsvorrichtung, abstützen.

Bevorzugte Ausführungsbeispiele der Antriebsvorrichtung nach der Erfindung sind nachstehend anhand der Zeichnungen näher erläutert. Es zeigen:
- Fig. 1: einen schematischen Längsschnitt eines Fahrzeug-Schiebedaches bei in Schließstellung stehendem Deckel,
- Fig. 2: einen Schnitt entsprechend Fig. 1 bei in die Offenstellung gebrachtem Deckel,
- Fig. 3: eine auseinandergezogene perspektivische Darstellung der Antriebsvorrichtung des Fahrzeugdaches nach den Fign. 1 und 2,
- Fig. 4: eine Draufsicht auf die Innenseite des Gehäusedeckels der Antriebsvorrichtung gemäß Fig. 3,
- Fig. 5: eine Draufsicht auf die in Fig. 3 nicht erkennbare Stirnseite des Schaltrades,
- Fig. 6: eine schematische Draufsicht auf eine Antriebsvorrichtung gemäß einer abgewandelten Ausführungsform der Erfindung, und
- Fig. 7: in größerem Maßstab eine Draufsicht auf das Zahnrad, das auf der Welle des Exzenterzahnrädergetriebes drehfest angeordnet ist und mit der Abtriebsseite des Untersetzungsgetriebes in Antriebsverbindung steht.

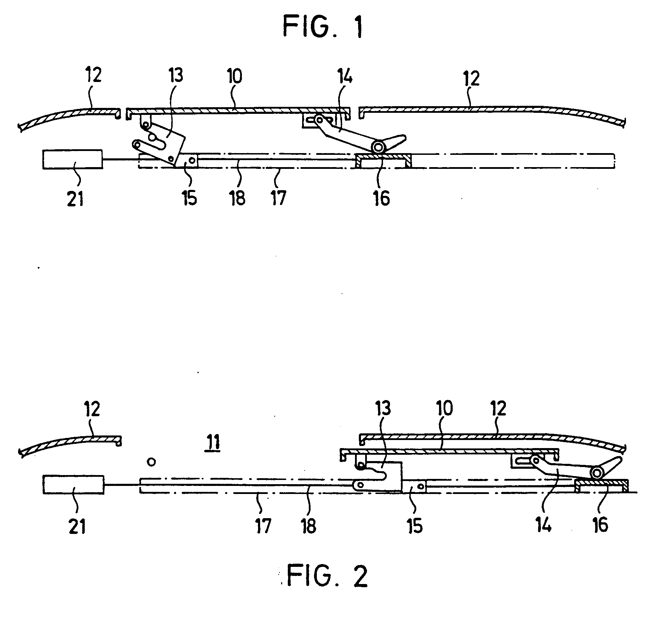

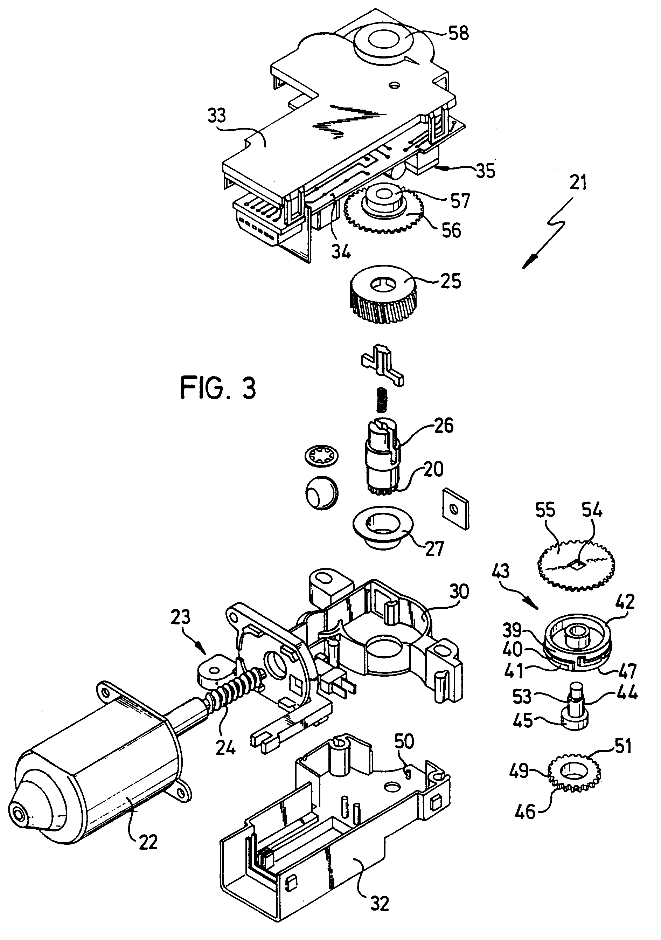

Das in den Fign. 1 und 2 veranschaulichte Fahrzeug-Schiebedach weist einen Deckel 10 auf, der in einer Schließstellung (Fig. 1) eine Dachöffnung 11 verschließt, die in einer festen Dachfläche 12 ausgebildet ist. Der Deckel 10 ist an beiden Seiten auf jeweils einem vorderen Deckelträger 13 und einem hinteren Deckelträger 14 abgestützt. Die Deckelträger 13 und 14 sind an einem vorderen Schlitten 15 bzw. einem hinteren Schlitten 16 angelenkt, die beide entlang einer dachfesten Längsführung 17 in Fahrzeuglängsrichtung verschiebbar geführt sind. Dabei greift an dem rechten und dem linken hinteren Schlitten 16 jeweils ein Antriebskabel 18, vorzugsweise ein Gewindekabel, an. Die Antriebskabel 18 wirken mit einem Antriebsritzel 20 (Fig. 3) einer insgesamt mit 21 bezeichneten Antriebsvorrichtung zusammen.

Das Antriebsritzel 20 wird von einem Elektromotor 22 über ein Untersetzungsgetriebe 23 angetrieben. Zu dem Untersetzungsgetriebe 23 gehören eine von dem Motor 22 vorzugsweise direkt angetriebene Schneckenwelle 24 und ein mit der Schneckenwelle 24 kämmendes Schneckenrad 25. Das Schneckenrad 25 ist im veranschaulichten Ausführungsbeispiel mit einer Welle 26 drehfest verbunden, die zugleich in drehfester Verbindung mit dem Antriebsritzel 20 steht und damit die Abtriebswelle der Antriebsvorrichtung 21 bildet. Die Welle 26 ist über eine Lagerbuchse 27 in einem Gehäuse gelagert, zu dem ein Getriebegehäuse 30 und ein Elektrogehäuse gehören, das seinerseits ein Gehäuseunterteil 32 und einen Deckel 33 aufweist, der zugleich das Getriebegehäuse 30 abdeckt. In dem Elektrogehäuse ist eine als gedruckte Leiterplatte ausgebildete Platine 34 untergebracht, die eine Schalteinrichtung 35 trägt. Die Schalteinrichtung 35 liegt in dem nicht näher veranschaulichten, beispielsweise in bekannter Weise ausgelegten Speisestromkreis des Elektromotors 22 und kann z.B. drei übereinanderliegende Schalter aufweisen, deren Betätigungsglieder mit jeweils einer von drei in Axialrichtung gegeneinander versetzten Nockenbahnen 39, 40 bzw. 41 am Außenumfang eines als Nockenrad ausgebildeten Schaltrades 42 zusammenwirken, um den Deckel 10 selbsttätig stillzusetzen, wenn er vorbestimmte Stellungen, beispielsweise die eine oder die andere Endstellung gemäß den Fign. 1 und 2, erreicht.

Bei einem Übergang des Deckels 10 von der einen in die andere Endstellung führt das Schneckenrad 25 mehrere Umdrehungen aus. Die jeweilige Drehstellung des Schneckenrades 25 ist daher zur eindeutigen Erfassung der Deckelstellung ungeeignet. Um eine solche eindeutige Zuordnung zu erhalten, ist zwischen dem Schneckenrad 25 bzw. der Welle 26 und dem Schaltrad 42 ein insgesamt mit 43 bezeichnetes Exzenterzahnrädergetriebe vorgesehen, das so ausgelegt ist, daß das Schaltrad 42 im Zuge einer Verstellbewegung des Deckels 10 von der einen in die andere Endstellung zu einer Drehbewegung von weniger als 360° veranlaßt wird.

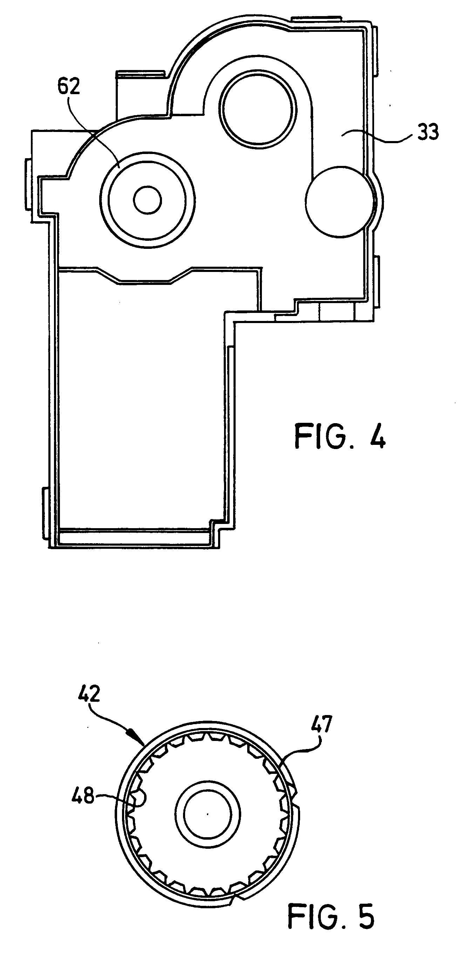

Zu dem Exzenterzahnrädergetriebe 43 gehören eine Welle 44, ein Exzenter 45, ein Innenrad 46 und ein Außenrad 47. Der Exzenter 45 und die Welle 44 sind drehfest miteinander verbunden. Bei der veranschaulichten Ausführungsform ist der Exzenter 45 an der Welle 44 angeformt. Auf dem Exzenter 45 ist das ringförmige Innenrad 46 drehbar gelagert. Das Außenrad 47 ist mit dem Schaltrad 42 drehfest verbunden. Im veranschaulichten Ausführungsbeispiel bildet das Außenrad 47 einen integralen Teil des Schaltrades 42. Das Außenrad 47 ist auf der Welle 44 drehbar gelagert und mit einer zu der Welle 44 koaxialen Innenverzahnung 48 versehen (Fig. 5). Das Innenrad 46 weist eine Außenverzahnung 49 auf, die mit der Innenverzahnung 48 in Kämmeingriff steht und deren Zähnezahl um mindestens eins und vorzugsweise um genau eins kleiner als die Zähnezahl der Innenverzahnung 48 des Außenrades 47 ist.

Von der dem Zahnrädergetriebe 43 zugewendeten Innenseite des Gehäuseunterteils 32 steht ein Führungsbolzen 50 parallel zur Welle 44 vor. Der Führungsbolzen 50 ragt in eine der Zahnlücken 51 der Zähne 49 des Innenrades 46. Auf diese Weise wird das Innenrad 46 an einer Umlaufbewegung gegenüber dem Außenrad 47 gehindert. Es kann jedoch eine hin- und hergehende Bewegung entlang einer Verstellachse ausführen, die beispielsweise die Achse der Welle 44 rechtwinklig schneidet.

An der Welle 44 ist ein Vierkant 53 angeformt, der in eine Vierkantausnehmung 54 eines auf die Welle 44 aufgesteckten Zahnrades 55 eingreift und damit für eine drehfeste Verbindung zwischen der Welle 44 und dem Zahnrad 55 sorgt.

Das Zahnrad 55 steht in Kämmeingriff mit einem Zahnrad 56, das mit der Welle 26 drehfest verbunden und mit einem ringförmigen Ansatz 57 versehen ist, der in einer Lagerbuchse 58 des Deckels 33 drehbar gelagert ist.

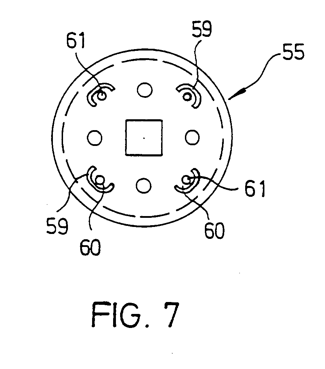

Das Zahnrad 55 ist, wie in Fig. 7 dargestellt, mit vier halbringförmigen Ausstanzungen 59 versehen, die gegeneinander jeweils um 90° versetzt sind. Die Ausnehmungen 59 lassen aus dem Material des Zahnrades 55 herausgestanzte Federarme 60 entstehen, die an ihrer dem Deckel 33 zugewendeten Seite jeweils einen Nocken 61 tragen. Die Nocken 61 sorgen für eine in Axialrichtung federnde Abstützung des Zahnrades 55 an einer ringförmigen Führungsbahn 62, die als vorspringender Steg an der Innenseite des Deckels 33 ausgebildet ist (Fig. 4).

Wenn im Betrieb der Motor 22 eingeschaltet wird und dadurch der Exzenter 45 zu einer Drehbewegung um die Achse der Welle 44 veranlaßt wird, führt das Innenrad 46 eine hin- und hergehende Bewegung mit Bezug auf den Führungsbolzen 50 aus, der eine Taumelbewegung um den Führungsbolzen überlagert ist. Dadurch wird das mit dem Schaltrad 42 einstückig verbundene Außenrad 47 zu einer Drehbewegung um die Welle 44 veranlaßt, die gegenüber der Drehbewegung des Antriebsritzels 20 in einem Verhältnis untersetzt ist, das von den Zähnezahlen der Verzahnungen 48 und 49 von Innenrad 46 und Außenrad 47 sowie von dem Zähneverhältnis der Zahnräder 55 und 56 abhängt. Die vorzugsweise als Mikroschalter ausgebildeten Schalter der Schalteinrichtung 35 werden über die Nockenbahnen 39, 40 und 41 des Schaltrades 42 besonders sicher und geräuscharm betätigt.

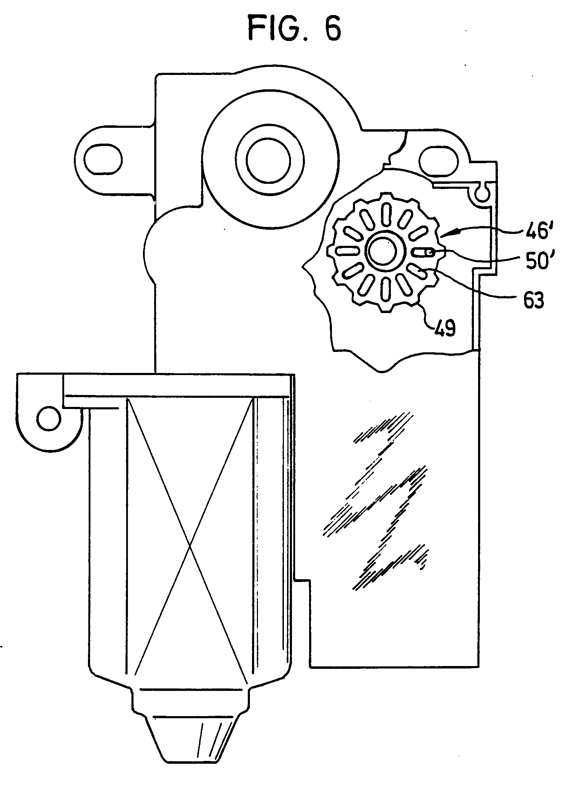

Bei der abgewandelten Ausführungsform gemäß Fig. 6 ist das Innenrad 46' mit einer Folge von zusätzlichen Ausnehmungen versehen, deren gegenseitiger Winkelabstand mit demjenigen der Zähne 49 des Innenrades übereinstimmt und die als radial gerichtete Langlöcher 63 ausgebildet sind, welche in Umfangsrichtung mit den Zahnköpfen des Innenrades 46' ausgerichtet sind. Ein gehäusefester Führungsbolzen 50' greift in eines der Langlöcher 63 ein, wobei es bei der Montage der Antriebsvorrichtung gleichgültig ist, mit welchem der Langlöcher 63 der Führungsbolzen 50' in Eingriff gebracht wird.

Im übrigen sind Aufbau und Wirkungsweise der Antriebsvorrichtung gemäß Fig. 6 analog denjenigen der zuvor erläuterten Ausführungsform.

## Patentansprüche

1. Antriebsvorrichtung für ein zwischen Endstellungen verstellbares Teil (10) eines Fahrzeugs, insbesondere für den Deckel (10) eines Fahrzeugdaches, mit einem Elektromotor (22), der über ein Untersetzungsgetriebe mit einem auf einer Abtriebswelle (26) sitzenden Antriebsritzel (20) verbunden ist, das seinerseits mit dem verstellbaren Teil (10) in Antriebsverbindung steht, sowie mit einer den Motor (22) steuernden Schalteinrichtung (35) zum Stillsetzen des Motors (22) in mindestens einer vorbestimmten Stellung des verstellbaren Teils (10), wobei zum Betätigen der Schalteinrichtung (35) ein Schaltrad (42) vorgesehen ist, das beim Verstellen des Teils (10) zwischen seinen Endstellungen über ein Exzenterzahnrädergetriebe (43) zu einer Drehbewegung von weniger als 360° veranlaßt wird, wobei das Exzenterzahnrädergetriebe (43) ein Außenrad (47) mit einer zu einer Welle (44) des Exzenterzahnrädergetriebes (43) koaxialen Innenverzahnung (48) und ein damit in Kämmeingriff stehendes außenverzahntes Innenrad (46) aufweist, das mindestens einen Zahn weniger als das Außenrad (47) hat, und das auf einem mit der Welle (44) drehfest verbundenen Exzenter (45) für eine relative Drehbewegung zwischen Innenrad (46) und Exzenter (45) gelagert ist, wobei das Innenrad (46) mittels eines feststehenden Führungsbolzens (50) an einer Umlaufbewegung gegenüber dem Außenrad (47) gehindert und das Außenrad (47) mit dem Schaltrad (42) drehfest verbunden ist, dadurch gekennzeichnet, daß das Innenrad (46, 46') mit einer der Innenrad-Zähnezahl entsprechenden Anzahl von Ausnehmungen (51, 63) versehen ist und der Führungsbolzen (50, 50') wahlweise mit einer dieser Ausnehmungen (51, 63) in Eingriff gebracht ist.

2. Antriebsvorrichtung nach Anspruch 1, dadurch gekennzeichnet, daß die Ausnehmungen von den Zahnlücken (51) der Zähne des Innenrades (46) gebildet sind.

3. Antriebsvorrichtung nach Anspruch 1, dadurch gekennzeichnet, daß das Innenrad (46') mit einer Folge von zusätzlichen Ausnehmungen (63) versehen ist, deren gegenseitiger Winkelabstand mit demjenigen der Zähne des Innenrades übereinstimmt.

4. Antriebsvorrichtung nach Anspruch 3, dadurch gekennzeichnet, daß die zusätzlichen Ausnehmungen als radial gerichtete Langlöcher (63) ausgebildet sind.

5. Antriebsvorrichtung nach Anspruch 4, dadurch gekennzeichnet, daß die Langlöcher (63) in Umfangsrichtung mit den Zahnköpfen des Innenrades (46') ausgerichtet sind.

6. Antriebsvorrichtung nach einem der vorhergehenden Ansprüche, dadurch gekennzeichnet, daß der Führungsbolzen (50) an einem Gehäuseteil (32) der Antriebsvorrichtung angebracht, insbesondere angeformt, ist.

7. Antriebsvorrichtung nach einem der vorhergehenden Ansprüche, dadurch gekennzeichnet, daß das Außenrad (47) einen integralen Teil des Schaltrades (42) bildet.

8. Antriebsvorrichtung nach einem der vorhergehenden Ansprüche, dadurch gekennzeichnet, daß das Untersetzungsgetriebe eine von dem Motor (22) angetriebene Schneckenwelle (24) und ein damit kämmendes Schneckenrad (25) aufweist.

9. Antriebsvorrichtung nach Anspruch 8, dadurch gekennzeichnet, daß mit der Welle (44) des Exzenterzahnrädergetriebes (43) ein Zahnrad (55) drehfest verbunden ist, das mit der Abtriebsseite (56) des Untersetzungsgetriebes in Antriebsverbindung steht.

10. Antriebsvorrichtung nach Anspruch 9, dadurch gekennzeichnet, daß das Zahnrad (55) auf der Welle (44) des Exzenterzahnrädergetriebes (43) in axialer Richtung federnd abgestützt ist.

11. Antriebsvorrichtung nach Anspruch 10, dadurch gekennzeichnet, daß das Zahnrad (55) mindestens zwei auf radial entgegengesetzten Seiten der Welle (44) des Exzenterzahnrädergetriebes (43) liegende Federarme (60) trägt, die sich an einer feststehenden Führungsbahn (62) abstutzen.

12. Antriebsvorrichtung nach Anspruch 11, dadurch gekennzeichnet, daß die Federarme (60) aus dem zwischen der Welle (44) des Exzenterzahnrädergetriebes (43) und der Verzahnung des Zahnrades (55) liegenden Material des Zahnrades herausgestanzt sind.

13. Antriebsvorrichtung nach Anspruch 11 oder 12, dadurch gekennzeichnet, daß die Führungsbahn (62) ringförmig ausgebildet und an einem Gehäuseteil (33) der Antriebsvorrichtung angebracht, insbesondere angeformt, ist.

14. Antriebsvorrichtung nach einem der vorhergehenden Ansprüche, dadurch gekennzeichnet, daß das Schaltrad (42) als Nockenrad ausgebildet ist.

## Claims

1. A drive device for a part (10) of a vehicle, particularly for the cover (10) of a vehicle roof, with an electric motor (22) which is connected via a reduction gear to a driving pinion (20) seated on an output shaft (26) and which is in turn drive-connected to the movable part (10) and to a switching means (35) for controlling the motor (22), for shutting down the motor (22) in at least one predetermined position of the movable part (10), a ratchet wheel (42) being provided to actuate the switching means (35) and which, upon displacement of the part (10) between its extreme positions, is caused via an eccentric toothed gearing (43) to perform a rotary movement of less than 360°, the eccentric toothed gearing (43) comprising an external gear wheel (47) comprising internal teeth (48) coaxial with the eccentric toothed gearing (43) and, meshing with this latter, an externally toothed internal gear wheel (46) which has at least one tooth fewer than the external gear wheel (47) and which is mounted on an eccentric member (45) which is rotationally rigidly connected to the shaft (44) for relative rotary movement between the internal gear wheel (46) and the eccentric member (45), the internal gear wheel (46) being prevented from performing a rotary motion in respect of the external gear wheel (47) by a fixed guide pin (50) while the external gear wheel (47) is rotationally rigidly connected to the ratchet wheel (42), characterised in that the internal gear wheel (46, 46') is provided with a number of recesses (51, 63) corresponding to the number of teeth on the internal gear wheel and in that the guide pin (50, 50') can be selectively engaged with one of the said recesses (51, 63).

2. A drive device according to Claim 1, characterised in that the recesses are formed by the gaps (51) between the teeth of the internal gear wheel (46).

3. A drive device according to Claim 1, characterised in that the internal gear wheel (46') is provided with a series of additional recesses (63), the angular distance between them coinciding with that of the teeth of the internal gear wheel.

4. A drive device according to Claim 3, characterised in that the additional recesses are constructed as radially directed elongated holes (63).

5. A drive device according to Claim 4, characterised in that the elongated holes (63) are in the peripheral direction aligned with the tips of the teeth of the internal gear wheel (46').

6. A drive device according to one of the preceding Claims, characterised in that the guide pin (50) is attached to and in particular integrally moulded on to a housing part (32) of the drive device.

7. A drive device according to one of the preceding Claims, characterised in that the external gear wheel (47) forms an integral part of the ratchet wheel (42).

8. A drive device according to one of the preceding Claims, characterised in that the reduction gear has, driven by the motor (22), a worm shaft (24) and a worm wheel (25) which meshes with it.

9. A drive device according to Claim 8, characterised in that rotationally rigidly connected to the shaft (44) of the eccentric toothed gearing (43) is a gear wheel (55) which is connected for drive to the output side (56) of the reduction gear.

10. A drive device according to Claim 9, characterised in that the gear wheel (55) is resiliently supported on the shaft (44) of the eccentric toothed gearing (43) in an axial direction.

11. A drive device according to Claim 10, characterised in that the gear wheel (55) has on radially opposite sides of the shaft (44) of the eccentric toothed gearing (43) two spring arms (60) which are biased on a fixed guide way (62).

12. A drive device according to Claim 11, characterised in that the spring arms (60) are stamped out of that material of the gear wheel which is located between the shaft (44) of the eccentric toothed gearing (43) and the teeth of the gear wheel (55).

13. A drive device according to Claim 11 or 12, characterised in that the guide way (62) is annular in construction and is attached to, and is particularly integrally moulded on a housing part (33) of the drive device.

14. A drive device according to one of the preceding Claims, characterised in that the ratchet wheel (42) is constructed as a cam wheel.

## Revendications

1. Dispositif d'entraînement pour une partie (10) d'un véhicule, réglable entre deux positions terminales, en particulier pour le plafond (10) d'un toit de véhicule comprenant un moteur électrique (22), qui est relié par l'intermédiaire d'une transmission de démultiplication à un pignon d'entraînement (20) se trouvant sur un arbre de sortie (26), pignon d'entraînement (20) qui de son côté est en liaison d'entraînement avec la partie réglable (10), et comprenant un dispositif de couplage (35), qui commande le moteur (22) et qui sert à arrêter le moteur (22) dans au moins une position déterminée à l'avance de la partie réglable (10), en prévoyant pour actionner le dispositif de couplage (35) une roue de manoeuvre (42), qui est mise lors du déplacement de la partie (10) entre ses positions terminales au moyen d'une transmission à roues dentées excentriques (43) en rotation sur moins de 360°, la transmission par roues dentées excentriques (43) présentant une roue extérieure (47) avec une denture intérieure (48) coaxiale à un arbre (44) de la transmission à roues dentées excentriques (43) et une roue intérieure (46) dentée à l'extérieur qui engrène avec la précédente, roue intérieure (46) qui a au moins une dent de moins que la roue extérieure (47) et qui est montée sur un excentrique (45) relié de façon solidaire en rotation à l'arbre (44) pour obtenir un mouvement relatif de rotation entre la roue intérieure (46) et l'excentrique (45), la roue intérieure (46) étant empêchée au moyen d'un tenon de guidage (50) fixe d'effectuer un mouvement circulaire par rapport à la roue extérieure (47) et la roue extérieure (47) étant reliée de façon solidaire en rotation à la roue de manoeuvre (42),
caractérisé en ce que
la roue intérieure (46, 46') est pourvue d'un nombre d'évidements (51, 63) qui correspond au nombre de dents de la roue intérieure et le tenon de guidage (50, 50') est mis en prise au choix avec l'un de ces évidements (51, 63).

2. Dispositif d'entraînement selon la revendication 1,
caractérisé en ce que
les évidements sont formés par les intervalles (51) entre les dents de la roue intérieure (46).

3. Dispositif d'entraînement selon la revendication 1,
caractérisé en ce que
la roue intérieure (46') est pourvue d'une série d'évidements additionnels (63), dont l'écart mutuel angulaire coïncide avec celui des dents de la roue intérieure.

4. Dispositif d'entraînement selon la revendication 3,
caractérisé en ce que
les évidements additionnels sont constitués sous la forme de trous oblongs (63) orientés radialement.

5. Dispositif d'entraînement selon la revendication 4,
caractérisé en ce que
les trous oblongs (63) sont alignés dans le sens périphérique avec les têtes des dents de la roue intérieure (46').

6. Dispositif d'entraînement selon l'une des revendications précédentes,
caractérisé en ce que
le tenon de guidage (50) est placé sur une partie du boîtier (32) du dispositif d'entraînement, et est en particulier formé à partir de celui-ci.

7. Dispositif d'entraînement selon l'une des revendications précédentes,
caractérisé en ce que
la roue extérieure (47) forme une partie intégrante de la roue de manoeuvre (42).

8. Dispositif d'entraînement selon l'une des revendications précédentes,
caractérisé en ce que
la transmission de démultiplication présente une vis sans fin (24) entraînée par le moteur (22) et une roue tangente (25) engrenant avec celle-ci.

9. Dispositif d'entraînement selon la revendication 8,
caractérisé en ce qu'
une roue dentée (55) est reliée de façon solidaire en rotation à l'arbre (44) de la transmission à roues dentées excentriques (43), roue dentée (55) qui est en liaison d'entraînement avec le côté sortie (56) de la transmission de démultiplication.

10. Dispositif d'entraînement selon la revendication 8,
caractérisé en ce que
la roue dentée (55) prend appui sur l'arbre (44) de la transmission à roues dentées excentriques (43) de façon élastique dans le sens axial.

11. Dispositif d'entraînement selon la revendication 10,
caractérisé en ce que
la roue dentée (55) porte au moins deux bras élastiques (60) reposant sur des côtés radialement opposés de l'arbre (44) de la transmission à roues dentées excentriques (43), bras élastiques (60) qui prennent appui sur une voie de guidage fixe (62).

12. Dispositif d'entraînement selon la revendication 11,
caractérisé en ce que
les bras élastiques (60) sont estampés à partir de la matière de la roue dentée qui se trouve entre l'arbre (44) de la transmission à roues dentées excentriques (43) et la denture de la roue dentée (55).

13. Dispositif d'entraînement selon la revendication 11 ou 12,
caractérisé en ce que
la voie de guidage (62) a une forme annulaire et est mise sur une partie du boîtier (33) du dispositif d'entraînement, en particulier est formée sur celle-ci.

14. Dispositif d'entraînement selon l'une des revendications précédentes,
caractérisé en ce que
la roue de manoeuvre (42) est constituée sous la forme d'une roue à cames.
